Europäisches Patentamt

European Patent Office

Office européen des brevets

(11) Publication number: **0 221 223**
**A2**

## (12) EUROPEAN PATENT APPLICATION

(21) Application number: 85830220.1

(51) Int. Cl.4: **A61C 13/225** , A61C 8/00

(22) Date of filing: 03.09.85

(43) Date of publication of application:
**13.05.87 Bulletin 87/20**

(84) Designated Contracting States:
**AT BE CH DE FR GB LI LU NL SE**

(71) Applicant: **Morena, Italo**
**Corso Montecucco 81/A**
**I-10141 Torino(IT)**

(72) Inventor: **Morena, Italo**
**Corso Montecucco 81/A**
**I-10141 Torino(IT)**

(74) Representative: **Buzzi, Franco et al**
**c/o Jacobacci-Casetta & Perani S.p.A. Via**
**Alfieri, 17**
**I-10121 Torino(IT)**

(54) Magnetic retaining device for dental prostheses, and a dental prosthesis using this device.

(57) A magnetic retaining device for dental prostheses, comprising samarium-cobalt magnets (3) intended to be implanted in the upper or lower jawbone ($M_1$, $M_2$) within respective casings (5, 15) of biocompatible material, and corresponding elements (11) incorporated in the prosthesis (1, 2) and magnetically attractable by the implanted magnets (3).

FIG. 1

## Magnetic retaining device for dental prostheses, and a dental prosthesis using this device.

This invention provides a device for retaining dental prostheses, particularly full prostheses for people without any teeth.

Traditionally, these fittings are retained by adhesive techniques using an exact match between the contact surfaces of the prosthesis and the gingival membrane, or techniques which use the force of magnetic repulsion between magnets incorporated in the upper and lower arches of the prosthesis with their like poles facing.

In the first case, a slight separation of the prosthesis from its point of contact suffices for the adhesion to be reduced and the prosthesis to detach itself. In the second case, slight misalignments between the opposing magnets of the upper and lower prostheses due to movements of the mouth cause an annoying tendency to relative sliding of the prostheses.

The object of the present invention is to avoid these disadvantages and provide a retaining device for dental prostheses which can ensure an efficient and firm fixing of the prosthesis without the problem of irritating side effects.

The retaining device according to the invention is characterised in that it comprises samarium-cobalt magnets intended to be implanted in the upper and/or lower jaw-bone within respective casings of biocompatible material, and corresponding elements incorporated in the prosthesis and magnetically attractable by the implanted magnets.

Preferably, the elements incorporated in the prosthesis are also constituted by samarium-cobalt magnets.

The biocompatible material of the casings is preferably titanium or, alternatively, Teflon or similar synthetic materials.

Advantageously, the casings have the form of hollow self-tapping screws containing the magnets and sealed by stoppers which are welded or locked by radial pins.

Alternatively, in a case in which the implant has to be carried out in bone areas which are heavily reworked and thus of reduced thickness, the casings have an elongate, normally triangular prismatic form with appendages for attachment to the bone by self-tapping screws.

The invention also has as its subject a dental prosthesis using the aforementioned device, characterised in that it has a lightened structure of resin incorporating reinforcing fibres.

The invention will now be described in detail with reference to the appended drawings, provided purely by way of non-limiting example, in which:

Figure 1 is a diagrammatic perspective view of a dental prosthesis with a magnetic retaining device according to the invention in the applied condition,

Figure 2 is a sectional view on an enlarged scale, taken along the line II-II of Figure 1,

Figure 3 is an exploded perspective view of a detail of Figures 1 and 2, and

Figure 4 illustrates a variant of Figure 3.

The prosthesis according to the invention comprises, in the example illustrated, an upper arch 1 and a lower arch 2 fitted respectively to the upper jaw-bone $M_1$ and the lower jaw-bone $M_2$ by means of a retaining device with magnetic attraction.

This device comprises a plurality of samarium-cobalt magnets 3 (normally two or three) implanted in the bones $M_1$ and $M_2$ in holes 4 made in the latter beforehand.

The samarium-cobalt magnets 3 are housed in respective containers 5 of biocompatible material which are inserted right into the respective bones $M_1$ and $M_2$ below the surfaces of the latter covered by the fibromucous which isolates the external environment.

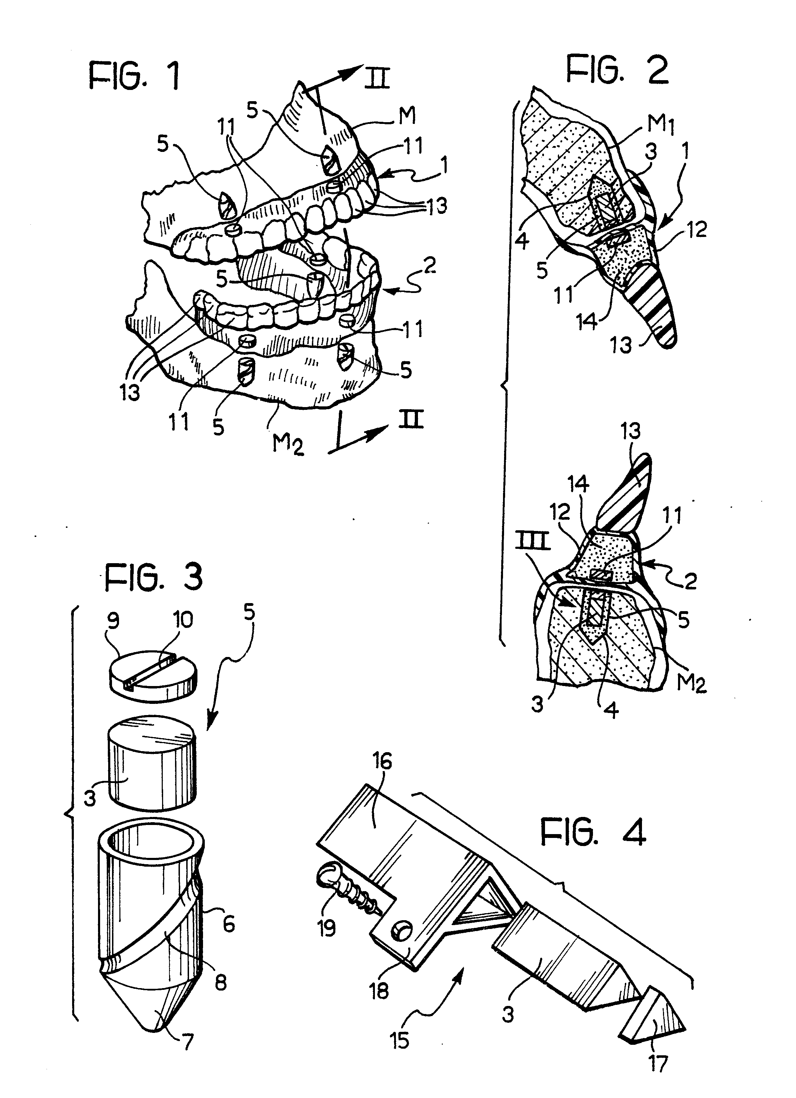

These containers can have the configuration illustrated in Figure 3 or that illustrated in Figure 4.

In the case of Figure 3, the container 5 comprises a hollow cylindrical body 6 having a pointed end 7 and an external helical groove 8. In practice, this container constitutes a self-tapping hollow screw which houses the samarium-cobalt magnet 3.

The cavity of the body 6 is closed at the end opposite to the point 7 by a stopper 9 provided with a slot 10 for a screwdriver and fixed to the body 6 by gluing, welding or radial-pin locking systems, not illustrated.

The material of which the container 5 is made is preferably titanium or a synthetic biocompatible material such as Teflon and the like.

The container 5 illustrated in Figure 3 is particularly suitable for implantation into bone areas of a certain thickness. When such thicknesses are not available, for example in the case of excessive resorption of the lower jaw-bone $M_2$, it is appropriate to use the container indicated 15 in Figure 4. This consists of an elongate, hollow prismatic body 16 of triangular section into which is fitted a samarium-cobalt magnet 3 of complementary form. The cavity of the body 16 is closed by a triangular stopper 17 fixed in a similar manner to that described above.

The container 15, which is of the same material as the container 5 described previously, is intended to be fitted into a corresponding elongate seat made in the bone and positioned so that one of its edges faces the crest of the bone.

The body 16 has a perforated lateral appendage 18 for the insertion of a self-tapping screw 19 intended to be screwed into a corresponding hole in the bone.

This body 16 could have an elongate form differing from that illustrated, for example parallelepipedal.

The samarium-cobalt magnets 3 implanted in the upper or lower jaw-bone are pre-arranged to cooperate by magnetic attraction with corresponding elements 11 incorporated in the upper arch 1 and the lower arch 2 of the prosthesis. Normally, the elements 11 are also constituted by samarium-cobalt magnets of cylindrical or elongate prismatic form.

For the purpose of making the action of magnetic attraction exerted by the magnets 3 and 11 even more efficient, the prosthesis according to the invention has, to advantage, a lighter structure than conventional prostheses. This structure is conveniently formed by a hollow body 12 of resin which carries the teeth 13 and the cavity of which is filled with a mass 14 of composite material of resin and reinforcing fibres, normally glass fibres or Kevlar.

Naturally, the details of construction and forms of embodiment may be varied widely from that described and illustrated without thereby departing from the scope of the present invention.

## Claims

1. Magnetic retaining device for dental prostheses, characterised in that it comprises samarium-cobalt (3) magnets intended to be implanted in the upper and/or lower jaw-bone ($M_1$, $M_2$) within respective casings of biocompatible material (5, 15), and corresponding elements (11) incorporated in the prosthesis (1, 2) and magnetically attractable by the implanted magnets (3).

2. Device according to Claim 1, characterised in that the elements incorporated in the prosthesis - (1, 2) consist of samarium-cobalt magnets (11).

3. Device according to Claim 1, characterised in that the biocompatible material of the casings (5, 15) is titanium.

4. Device according to Claim 1, characterised in that the biocompatible material of the casings (5, 15) is Teflon.

5. Device according to Claim 3 or Claim 4, characterised in that the casings (5) are cylindrical in shape.

6. Device according to Claim 5, characterised in that the casings (5) are in the form of hollow self-tapping screws (6) which contain the samarium-cobalt magnets (3) and the cavities of which are sealed by stoppers (9).

7. Device according to Claim 6, characterised in that the stoppers (9) are welded.

8. Device according to Claim 6, characterised in that the stoppers (9) are fixed by radial pins.

9. Device according to Claim 3 or Claim 4, characterised in that the casings (15) have an elongate prismatic form.

10. Device according to Claim 9, characterised in that the prismatic casings (15) have a triangular section.

11. Device according to Claim 9, characterised in that the prismatic casings (15) are provided with appendages (18) for attachment to the bone ($M_1$, $M_2$) by self-tapping screws (19).

12. Dental prosthesis using a magnetic retaining device according to one or more of the preceding claims, characterised in that it has a lightened structure of resin (12) incorporating reinforcing fibres (14).

FIG. 1

FIG. 2

FIG. 3

FIG. 4